# EUROPEAN PATENT APPLICATION

(11) **EP 4 596 169 A1**
(43) Date of publication of application: **06.08.2025**
(21) Application number: 23871182.4
(22) Date of filing: 26.09.2023
(51) Int. Cl.: B23P 11/00

(54) **ISOSTATIC INTERFERENCE-FIT JOINT**

(30) Priority: 26.09.2022 CL 202202608
(71) Applicant: Castro Arriagada, Luis Osvaldo, Copiapó (CL)
(72) Inventor: MULET MARTÍNEZ, Mauricio, Vallenar (CL)
(74) Representative: Ungria López, Javier
(86) International application number: PCT/IB2023/059527
(87) International publication number: WO 2024/069413

(57) **Abstract**

The present invention relates to a novel isostatic interference-fit joint wherein the assembly chamber has two diameters, having a section S1 and another narrower section S2, which forms part of the cylinder made up of several cylinders with interference-fit joints.

The cylinder has two diameters since the chamber must be loaded with a cylinder that fits in the section S1 and does not fit in the narrower section S2. Then, once the assembly chamber is closed and the pressure is increased, the diameter of the assembly chamber increases, particularly the section S2, and the composite chamber enters, being assembled with the section S2, once the pressure is extracted.

In order to facilitate the assembly, it is better for the assembly chamber to operate vertically, with the section S1 at the top and the composite cylinder falls under its own weight inside the section S2 when the pressure increases. It is subsequently disassembled and the result is the composite cylinder with one more cylinder, joined by interference and another section S2 must be included in the assembly chamber for reuse.

## Description

There are ways to manufacture a thick-walled cylinder composed of several concentric cylinders interference-joined by isostatic pressure, which is used to produce high pressure.

One way to produce composite cylinders is to use an assembly chamber, which is necessary to produce the interference joining of two cylinders by isostatic pressure that produce interference when they are at atmospheric pressure; but it is possible to increase the diameter of at least one of them, forming with an auxiliary cylinder a tubular chamber that increases its internal diameter with the pressure inside the assembly chamber and eliminating the interference.

This is the invention CL 202101788, which shows a new way to manufacture composite cylinders or high-pressure chambers, to be used in high pressure pasteurization (HPP) of food; or to produce high pressure mechanical elements (HIP) or for hydrogen storage.

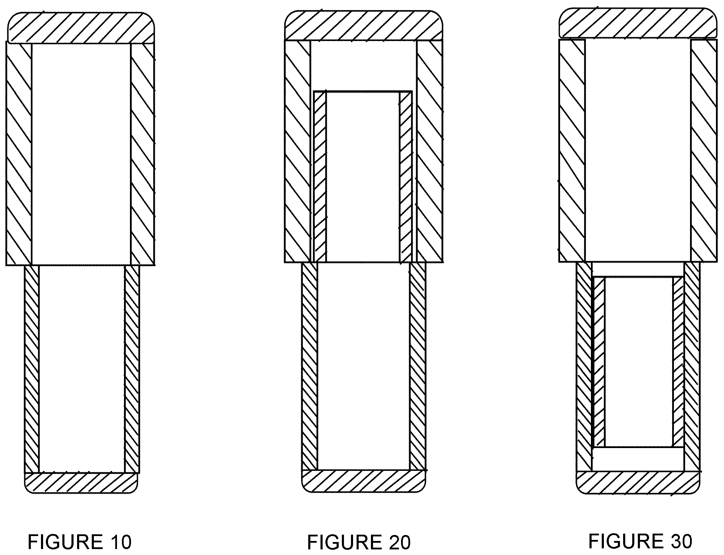

The present "specification" relates to a "new assembly chamber", which does not make it necessary to provide tubular chambers for assembly. It is an assembly chamber built from two consecutive sections, S1 of larger diameter and S2 of smaller internal diameter (FIGURE 10), wherein the assembly chamber once used loses its section S2 and incorporates it externally to the composite chamber, according to the following procedure:
In section S1 of the assembly chamber, a cylinder is placed in section S2 of smaller internal diameter (FIGURE 20); the cylinder does not enter section S2 because it is slightly larger than the internal diameter of section S2; as it is placed in the new assembly chamber, when the pressure rises, the diameter of section S2 increases until the cylinder housed in section S1 fits in the section.

An internal mechanism of the assembly chamber moves the cylinder which enters section S2 once the pressure rises. One possibility is that it is placed in a vertical position with S1 at the top; so that when the diameter of section S2 increases, it is displaced by the weight.

The pressure is removed and the cylinder is assembled with the new assembly chamber in section S2 (FIGURE 30), which is disassembled leaving the composite cylinder with one more cylinder and the rest of the assembly chamber that will need to be reassembled.

The new assembly chamber must have a joining mechanism in its two sections, so that it can be easily cut or separated after its use, providing the composite cylinder with the smaller half. It can be externally supported in the axial direction so that the chamber is not so stressed by the pressure in the axial direction.

It is also advisable that they are glued together as the cylinder is being made, especially the part of smaller diameter and short cylinders that will form the side caps to make chambers or simply leaving the composite cylinder.

### Description of figures:

Figure 10: Description of the new assembly chamber having two sections S1 and S2.
Figure 20: Assembly chamber with the cylinder to be assembled in section S1, without pressure.
Figure 30: Assembly chamber with the cylinder to be assembled in section S2, because the pressure was raised and allowed passage of the cylinder to section S2.

## Claims

1. An assembly chamber especially useful for subjecting a fluid to pressure which is poured into it by any perforation, **CHARACTERIZED in that** it is constituted by at least two cylindrical sections S1 and S2, (11 and 12) one larger than the other or forming a cylinder having a slightly conical frustum shape; two cylindrical caps of different sizes (21, 22) located at the ends of said assembly chamber, a piece in the form of a cylindrical or conical tube (30), which fits in the first section S1 and does not fit in the second section S2 when the assembly chamber is unpressurized.

2. The assembly chamber according to claim 1, **CHARACTERIZED in that** said assembly chamber, or other chamber, is loaded with the tube (30) the dimension of which fits in the first section S1 of the assembly chamber and does not fit in the section S2, is closed and placed loaded and unpressurized in a vertical position; the pressure of the fluid entering the chamber is raised and inflates or expands the assembly chamber, slightly increasing its internal diameter; at this time, the tube (30) now fits inside section S2 and drops down by gravity; the pressure is removed from the assembly chamber and the tube becomes tightly assembled with section S2 of the chamber; and the process can be repeated with other assembly chambers, adding assembled tubes and forming a thick-walled tube.
